# EUROPÄISCHE PATENTSCHRIFT

(11) **EP 1 784 849 B1**
(45) Veröffentlichungstag und Bekanntmachung des Hinweises auf die Patenterteilung: **19.12.2007**
(21) Anmeldenummer: 05783003.6
(22) Anmeldetag: 23.08.2005
(51) Int. Cl.: H01H 71/02

(54) **VERBINDUNGSELEMENT, VERBINDUNG UND VERFAHREN ZUR HERSTELLUNG EINER VERBINDUNG ZWISCHEN INSTALLATIONSSCHALTGERÄTEN**
CONNECTOR ELEMENT CONNECTION AND METHOD FOR PRODUCTION OF A CONNECTION BETWEEN INSTALLATION BREAKERS
ELEMENT D'ASSEMBLAGE, ASSEMBLAGE ET PROCEDE POUR ASSEMBLER DES COMMUTATEURS D'INSTALLATION

(30) Priorität: 02.09.2004 DE 102004042428
(43) Veröffentlichungstag der Anmeldung: 16.05.2007
(73) Patentinhaber: ABB PATENT GmbH, 68526 Ladenburg (DE)
(72) Erfinder: SELLNER, Rudolf, 68766 Hockenheim (DE); BITZ, Matthias, 68789 St. Leon-Rot (DE)
(74) Vertreter: Miller, Toivo
(86) Internationale Anmeldenummer: PCT/EP2005/009091
(87) Internationale Veröffentlichungsnummer: WO 2006/024430

(56) Entgegenhaltungen:
- EP-A- 1 109 277
- DE-U1- 8 322 594

## Beschreibung

Die Erfindung betrifft ein Verbindungselement zum Verbinden von Installationsschaltgeräten gemäß dem Oberbegriff des Anspruchs 1, eine Verbindung zwischen Installationsschaltgeräten gemäß dem Oberbegriff des Anspruchs 15, sowie ein Verfahren zum Verbinden von Installationsschaltgeräten gemäß dem Oberbegriff des Anspruchs 17.

Ein einpoliger elektrischer Leitungsschutzschalter oder FI-Schutzschalter besitzt ein Gehäuse, das schalenförmig ausgebildet ist, wobei die Stirnkanten der Schalenwände gegeneinander gelegt werden. Die Fixierung der beiden Schalen zueinander erfolgt beispielsweise mittels Nietverbindungen. Solche einpoligen Installationsschaltgeräte können zu mehrpoligen zusammengesetzt werden. Bekannt ist, die einzelnen Pole miteinander zu vernieten. Nietverbindungen sind jedoch technisch aufwendig.

Die EP 1 109 277 A2 beschreibt als Alternative zur Nietverbindung die Verbindung zweier Installationsschaltgeräte durch ein Verbindungselement, welches einen etwa zylinderförmigen Grundkörper mit einem ersten Außendurchmesser aufweist, an dessen Stirnseiten jeweils je zwei radial auffedernde, axial vorspringende, erste und zweite Spreizarme angeformt sind. Die Außenkonturen der Spreizarme liegen auf einer zylindrischen Mantelfläche, deren Außendurchmesser kleiner ist als der erste Außendurchmesser des Grundkörpers. Die freien Enden der Spreizarme weisen radial vorspringende Nasen auf, und zwar auf entgegengesetzte liegenden Mantellinien. Im montierten Zustand rasten die Nasen hinter Rücksprüngen an den mit dem Verbindungselement zu verbindenden Gehäusen der nebeneinanderliegenden Installationsschaltgeräte ein.

Eine Verbindung zweier Installationsschaltgeräte mit einem Verbindungselement wie in EP 1 109 277 A2 beschrieben, weist allerdings ein mechanisches Spiel auf. Außerdem kann es zu ungewolltem Entrasten der Verbindung kommen, wenn nämlich die Spreizarme aufeinander zufedern und somit wieder unter den Rücksprüngen hindurchgleiten.

Um das zu verhindern, ist bei der Verbindung wie in der EP 1 109 277 A2 beschrieben, ein Zapfen einzufügen, der eine Federung der Spreizarme aufeinander zu verhindert. Durch die Notwendigkeit, diesen Zapfen einzufügen, wird die Verbindung gemäß EP 1 109 277 A2 allerdings aufwendig.

Aufgabe der Erfindung ist es daher, ein gattungsgemäßes Verbindungselement zu schaffen, mit dem der Verbindungsvorgang zweier miteinander zu verbindenden Installationsschaltgeräte deutlich vereinfacht und zuverlässiger herstellbar ist.

Weiterhin ist es Aufgabe der Erfindung, eine einfache und zuverlässige Verbindung zweier Installationsschaltgeräte zu schaffen, sowie ein Verfahren zur Herstellung dieser Verbindung zu beschreiben.

Die Aufgabe wird erfindungsgemäß gelöst durch ein Verbindungselement mit den kennzeichnenden Merkmalen des Anspruchs 1. Hinsichtlich einer erfindungsgemäßen Verbindung wird die Aufgabe gelöst durch die kennzeichnenden Merkmale des Anspruchs 15. Hinsichtlich des Verfahrens zur Herstellung einer Verbindung zweier Installationsschaltgeräte wird die Aufgabe gelöst durch die kennzeichnenden Merkmale des Anspruchs 17.

Erfindungsgemäß ist also zwischen einem ersten und zweiten Spreizarm jeweils ein federndes Spreizelement angebracht, derart, dass das Spreizelement die auffedernde Aufspreizung der Spreizarme unterstützt und Federungen der ersten und zweiten Spreizarme aufeinander zu erschwert. Vorteilhafterweise ist das federnde Spreizelement dabei zwischen den freien Enden der Spreizarme angebracht.

In einer weiteren sehr vorteilhaften Ausgestaltungsform der Erfindung ist das Spreizelement eine Druckfeder, deren Anlenkpunkte sich an aufeinander zuweisenden Flächen der Spreizarme befinden.

Der Vorteil eines erfindungsgemäßen Verbindungselementes liegt darin, dass die Verbindung sehr zuverlässig und maßstabil hergestellt werden kann. Das Spreizelement, das erfindungsgemäß zwischen den Spreizarmen angebracht ist, erhöht die Spreizkraft der beiden Spreizarme, nachdem diese hinter den Rücksprüngen an den zu verbindenden Gehäusen verrastet sind. Außerdem verhindert das Spreizelement ein unbeabsichtigtes Federn der Spreizarme aufeinander zu. Es müssen somit bei Verwendung eines erfindungsgemäßen Verbindungselementes keine zusätzlichen Zapfen eingeführt werden, um diese Federungen zu vermeiden.

Ein weiterer Vorteil der Erfindung liegt bei der Verwendung eines erfindungsgemäßen Verbindungselementes darin, dass aufgrund der zusätzlichen Druckkraft des Spreizelementes auf die beiden federnden Spreizarme sich die Mantellinien und die die Rücksprünge hintergreifenden Nasen gegebenenfalls an Innenkonturen in den zylindrischen Aufnahmevertiefungen anpassen können.

Eine sehr vorteilhafte Ausgestaltungsmöglichkeit der Erfindung besteht darin, dass die Druckfeder ein S-förmig gebogenes, längserstrecktes Teil ist. Dies kann beispielsweise ein S-förmig gebogenes federndes Band sein. Das federnde Spreizelement kann dabei Vorteilhafterweise an den Spreizarmen angeformt sein. Es kann dann aus dem gleichen Material bestehen wie die Spreizarme selbst. Sehr vorteilhaft ist es, wenn das Spreizelement zusammen mit dem Verbindungselement aus Kunststoff besteht und in einem Spritzgussverfahren in einem Stück hergestellt ist.

Weiterhin vorteilhaft ist eine Ausgestaltungsmöglichkeit des Verbindungselementes, bei dem die Spreizarme im montierten Zustand an ihrem freien Ende mit einem Spezialwerkzeug aufeinander drückbar sind. Dann nämlich können zum Lösen der Verbindung die Spreizarme von der dem Verbindungselement gegenüberliegenden Seite des Installationsschaltgerätes her durch die Öffnung, in die das Verbindungselement eingerastet wurde, mit dem Spezialwerkzeug zusammengedrückt werden, so dass die radial vorspringenden Nasen des Verbindungselementes von den Rücksprüngen entrasten und das Verbindungselement aus dem Durchgangsloch einfach herausgezogen werden kann.

Damit Toleranzen in den Gehäusen ausgeglichen werden, ist die Übergangsfläche des Grundkörpers zu den Spreizarmen und die Übergangsfläche von den Spreizarmen zu den Nasen jeweils konisch ausgebildet. Dadurch wird erreicht, dass auch bei ungünstiger Toleranzlage der Rücksprung an den Nasen anliegt.

Ein weiterer Vorteil eines erfindungsgemäßen Verbindungselementes liegt auch darin, dass die Materialauswahl und der konstruktive Gestaltungsspielraum zur Gestaltung der Spreizarme sehr groß sind. Es muss nicht mehr, wie bei der Lösung der EP 1 109 177 A2, darauf geachtet werden, dass die Spreizarme selbst schon relativ steif ausgeführt sind. Die Spreizarme selbst können relativ weich ausgeführt sein, denn das federnde Spreizelement erzeugt die nötige Druckkraft, um das Verbindungselement in der Verrastlage zu halten.

So kann das federnde Spreizelement aus dem gleichen Material bestehen wie die Spreizarme. Dieses Material kann vorteilhafterweise Kunststoff sein. Das Verbindungselement kann dann beispielsweise zusammen mit dem federnden Spreizelement in einem Spritzgussvorgang hergestellt werden. Dadurch ist eine sehr kostengünstige Fertigungsmöglichkeit der Verbindungselemente gegeben.

Weitere vorteilhafte Ausgestaltungen und Verbesserungen der Erfindung sind den weiteren Unteransprüchen zu entnehmen.

Anhand der Zeichnungen, in denen drei Ausführungsbeispiele der Erfindung dargestellt sind, sollen die Erfindung sowie weitere vorteilhafte Ausgestaltungen und Verbesserungen der Erfindung näher erläutert und beschrieben werden.

Es zeigen:
- Fig. 1: eine Teilschnittansicht zweier Installationsschaltgeräte mit einem Verbindungselement, wobei nur der dem Verbindungselement benachbarte Bereich dargestellt ist,
- Fig. 2: eine Längsschnittansicht durch das erfindungsgemäße Verbindungselement,
- Fig. 3: eine Aufsicht auf das freie Ende der Spreizarme des Verbindungselementes nach Fig. 2, in entspanntem Zustand,
- Fig. 4: eine Aufsicht auf das freie Ende der Spreizarme des Verbindungselementes nach Fig. 2, in zusammengedrücktem Zustand, entsprechend dem Montagezustand,
- Fig. 5: eine Aufsicht auf das freie Ende der Spreizarme einer weiteren Ausführungsform eines erfindungsgemäßen Spreizelementes, links in entspanntem Zustand, rechts in zusammengedrücktem Zustand,
- Fig. 6: eine Aufsicht auf das freie Ende der Spreizarme einer weiteren Variante eines erfindungsgemäßen Verbindungselementes, links in entspanntem Zustand, rechts in zusammengedrücktem Zustand in Einbaulage,
- Fig. 7: eine weitere Ausführungsform der Verbindung zweier Schaltgeräte mit einem erfindungsgemäßen Verbindungselement, wobei die Öffnungsdurchmesser sich von der in Fig. 1 gezeigten Verbindung unterscheiden.
- Fig. 8: eine isometrische Darstellung eines erfindungsgemäßen Verbindungselementes

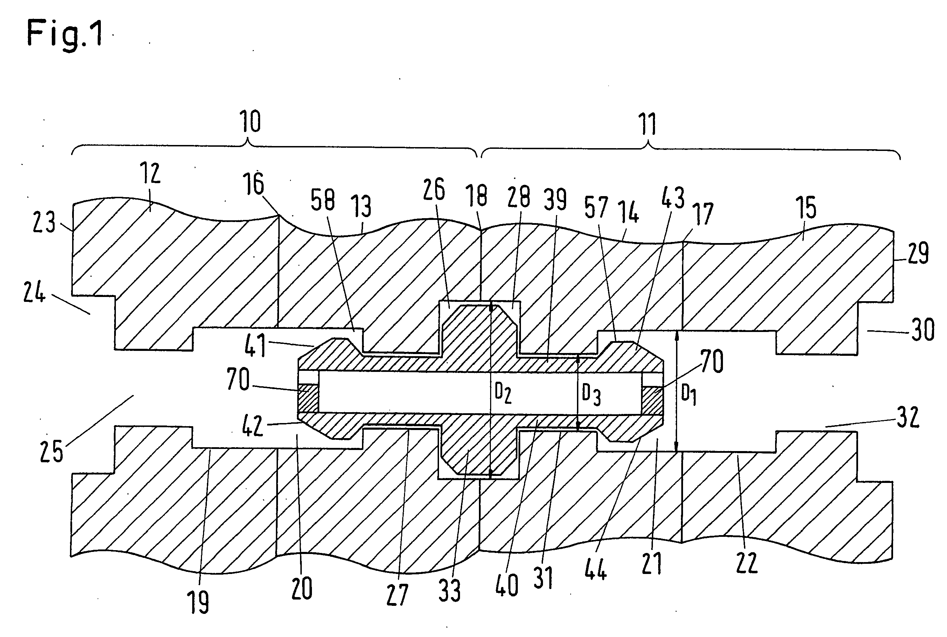

Fig. 1 zeigt in einer Schnittansicht den der Verbindungsstelle benachbarten. Bereich zweier nebeneinander angeordneter Installationsschaltgerätegehäuse 10 und 11. Jedes Gehäuse 10, 11 ist aus schalenförmigen Gehäuseteilen 12, 13 sowie 14, 15 zusammengesetzt, wobei die Teilungsfuge zwischen den Gehäuseteilen 12 und 13 die Bezugsziffer 16 und die Teilungsfuge zwischen den Gehäuseteilen 14 und 15 die Bezugsziffer 17 trägt. Die Berührungsfläche der beiden Gehäuse 10, 11 ist mit 18 bezeichnet und entspricht je einer Breitseite der beiden Gehäuse 10, 11.

Ausgehend von den Trennfugen 16, 17 besitzt jedes Gehäuseteil eine zylindrische erste Vertiefung 19, 20 beziehungsweise 21, 22, die im zusammengebauten Zustand, wenn die beiden Gehäuseteile 12, 13 bzw. 14, 15 aneinandergesetzt sind, miteinander einen zylindrischen Innenraum bilden. An der Breitseite 23 des Gehäuseteiles 12 befindet sich eine Vertiefung 24, die mit der Vertiefung 19 durch ein Durchgangsloch 25 verbunden ist. In ähnlicher Weise besitzt die Breitseite des Gehäuseteiles 13, die die Berührungsfläche 18 bildet, eine in diese Fläche einmündende Vertiefung 26, die mit der Vertiefung 20 durch ein Durchgangsloch 27 verbunden ist.

An der Breitseite 29 des Gehäuseteiles 15 befindet sich eine Vertiefung 30, die mit der Vertiefung 22 durch ein Durchgangsloch 32 verbunden ist. In ähnlicher Weise besitzt die Breitseite des Gehäuseteiles 14, die ebenfalls die Berührungsfläche 18 bildet, eine in diese Fläche einmündende Vertiefung 28, die mit der Vertiefung 21 durch ein Durchgangsloch 31 verbunden ist.

Die Vertiefungen 19, 20, 21 und 22, 24 und 30 ebenso wie die Durchgangslöcher 25, 27, 31, 32 fluchten miteinander.

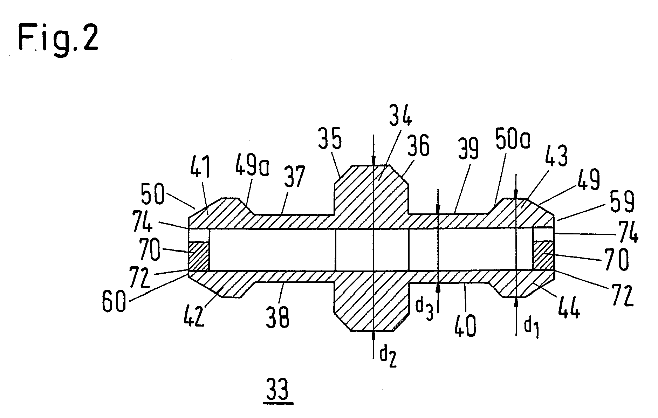

In die Vertiefungen bzw. Durchgangslöcher ist ein Verbindungselement 33 eingesetzt, das in der Fig. 2 im Schnitt dargestellt ist. Das Verbindungselement 33 besteht auf Kunststoff und wird in einem Spritzgussverfahren hergestellt.

Der Innendurchmesser der Durchgangslöcher 25, 27, 31, 32 ist mit D3 bezeichnet. Der Innendurchmesser der ersten Vertiefungen 21, 22, 19, 20 ist mit D1 bezeichnet. Der Innendurchmesser der zweiten Vertiefungen 28, 26, 24, 30 ist mit D2 bezeichnet.

Das Verbindungselement 33 besitzt einen mittig liegenden zylindrischen Grundkörper 34, von dessen Stirnseiten 35 und 36 in axialer Richtung vorspringende federnde Spreizarme 37, 38 und 39, 40 paarweise angebracht sind.

Die außen liegenden Teile der Stirnseiten 35 und 36 des Grundkörpers 34 bilden eine Konusform, deren offene Seiten gegeneinander gerichtet sind. Der Konuswinkel beträgt dabei geringfügig weniger als 180°. Es ist ein sehr stumpfer Konuswinkel.

Der Außendurchmesser des Grundkörpers 34 ist mit d2 bezeichnet. Er ist so gewählt, dass er in die Vertiefungen 26, 28, 30, 24 hineinpasst. Die die Spreizarme 37, 38 bzw. 39, 40 umhüllenden Zylinderflächen besitzen einen Außendurchmesser d3, der mit dem Innendurchmesser der Durchgangslöcher 25, 27, 31, 32 korrespondiert. An den Spreizarmen 37, 38 bzw. 39, 40 sind jeweils Nasen 41, 42, 43, 44 angeformt, die radial in entgegengesetzte Richtung vorspringen und auf diametral sich gegenüberliegenden Mantellinien oder Mantelflächen liegen.

Die Nasen 41, 42, 43, 44 weisen äußere Nasenflächen 49, 50 auf, die eine Kegelform oder Kegelstumpfform bilden, wobei sich die Kegelstümpfe zu den freien Enden 59, 60 der Spreizarme 37, 38, 39, 40 hin verjüngen.

Die Nasen 41, 42, 43, 44 besitzen auf ihren den Stirnflächen 35, 36 gegenüberliegenden inneren Nasenflächen 49a, 50a, ebenfalls eine Konusform, die zum freien Ende hin offen ist und ebenfalls einen ähnlichen Öffnungswinkel besitzt wie die Stirnflächen 35 und 36.

Die Konusfläche 35, 36, 49a, 50a, 49, 50 dienen dazu, Toleranzen der Längserstreckung der Bohrungen 25, 27, 31, 32, sowie Toleranzen in den Durchmessern auszugleichen, und ein automatisiertes Einsetzen der Verbindungselemente in die Öffnungen zu erleichtern.

Am freien Ende 59 der beiden Spreizarme 39, 40 ist zwischen diesen ein federndes Spreizelement 70 angeformt. Ebenso ist an den freien Enden 60 der Spreizarme 37, 38 ein federndes Spreizelement 70 zwischen den beiden Spreizarmen 37, 38 angeformt. Das federnde Spreizelement 70 wirkt wie eine Druckfeder, die die Spreizarme 39, 40 bzw. 37, 38 auseinander drückt.

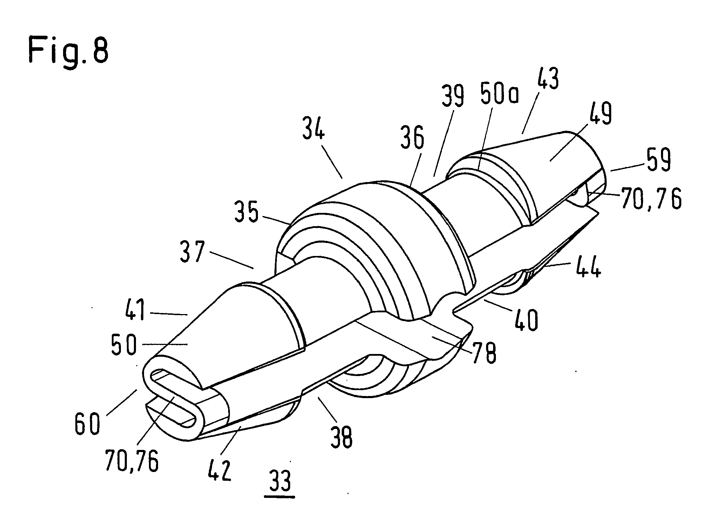

Es ist im Ausführungsbeispiel der Fig. 2 und 8 ein S-förmig gebogenes, längserstrecktes, bandförmiges Teil, welches auch als eine S-förmig gebogene Bandfeder 76 bezeichnet werden kann.

Fig. 8 zeigt in isometrischer Darstellung ein erfindungsgemäßes Verbindungselement 33, wie es in Fig. 2 im Längsschnitt dargestellt ist. Gleiche Elemente oder Teile wie bereits in Fig. 1 oder 2 beschrieben tragen die gleichen Bezugsziffern. Der Verbindungskörper 33 weist einen axial verlaufenden Längsschlitz 78 auf. Dadurch ist auch der Grundkörper 34 beim Einsetzen des Verbindungselementes 33 in die entsprechenden Vertiefungen radial federnd zusammendrückbar, was die Konturanpassungsfähigkeit des Verbindungselementes 33 weiter erhöht.

Bei einer automatengestützten rationellen Montage werden oft die Verbindungselemente durch Rüttlerzuführung in den Zuführungsbehälter des Montageautomaten verbracht. Durch die erfindungsgemäße S-Form der Bandfeder 76 wird dabei ein Verhaken der Verbindungselemente untereinander verhindert, so dass die rationelle Montage verbessert wird.

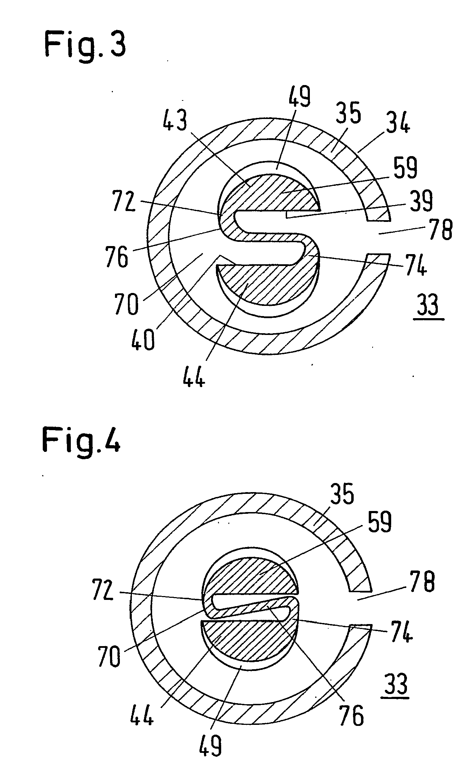

Fig. 3 zeigt eine Aufsicht auf die freien Enden 59, 60 des Verbindungselementes 33, in entspanntem Zustand. Gleiche Bauelemente oder Teile wie bereits in Fig. 1, 2 oder 8 beschrieben, tragen in Fig. 3 die gleichen Bezugsziffern. Die die Nasenfläche 49 der radial vorspringenden Nasen 43 und 44 umhüllende Fläche hat einen ovalen Querschnitt. Die Anlenkpunkte 72, 74, der S-förmig gebogenen Bandfeder 76 sind an den Spreizarmen 39 und 40 angeformt.

Fig. 4 zeigt das Verbindungselement 33 mit dem Spreizelement 70 nach Fig. 3, wobei in der Fig. 4 aber die freien Enden der Spreizarme 39 und 40 zusammengedrückt sind. Diese zusammengedrückte Position gemäß Fig. 4 entspricht der Lage, in der das Verbindungselement 33 durch das Durchgangsloch 31 in der Gehäusehälfte 14 des Installationsgerätes 11 (siehe Fig. 1) hindurchgeführt wird. Im zusammengedrückten Zustand der Fig. 4 liegt die die vorspringenden Nasen 43, 44 umhüllende Fläche auf einer Mantelfläche mit kreisförmigem Querschnitt, so dass die vorspringenden Nasen 43, 44 somit leicht durch das Durchgangsloch 31 mit ebenfalls kreisförmigem Querschnitt hindurchgeführt werden können.

Wie in Fig. 1 ersichtlich, liegen nach Durchführen der vorspringenden Nasen 43, 44 durch das Durchgangsloch 31 und Einrasten der inneren Nasenfläche 50a, auch Rastfläche genannt, hinter dem Rücksprung 57, die Spreizarme 39 und 40 flächig an der Innenkontur des Durchgangslochs 31 an. Durch die Druckkraft des federnden Spreizelements 70 werden die Spreizarme 39, 40 formflüssig gegen die Innenkontur des Durchgangslochs 31 gedrückt. Der Außendurchmesser der die Spreizarme 39, 40 umhüllenden Zylinderfläche ist in etwa gleich dem Innendurchmesser des Durchgangslochs 31.

Zur Montage werden also zunächst die beiden Gehäuseteile 14 und 15 bzw. 12 und 13 zusammengesetzt zu jeweils einem Installationsgerät 11, bzw. 10. Danach wird das Verbindungselement mit den Spreizarmen 39, 40 durch das Durchgangsloch 31 hindurch gesteckt. Sobald sie durch das Durchgangsloch 31 durchgeglitten sind, hintergreifen sie mit der Rastfläche 50a den an die Durchgangsöffnung anschließenden Rücksprung 57.

Zur Befestigung des anderen Installationsgerätes 10 wird dieses mit dem Durchgangsloch 27 über die Nasen 41, 42 gesteckt, so lange, bis die Nasen 41, 42 mit ihrer Rastfläche 49a den Rücksprung 58 des Durchgangsloches 27 hintergreifen.

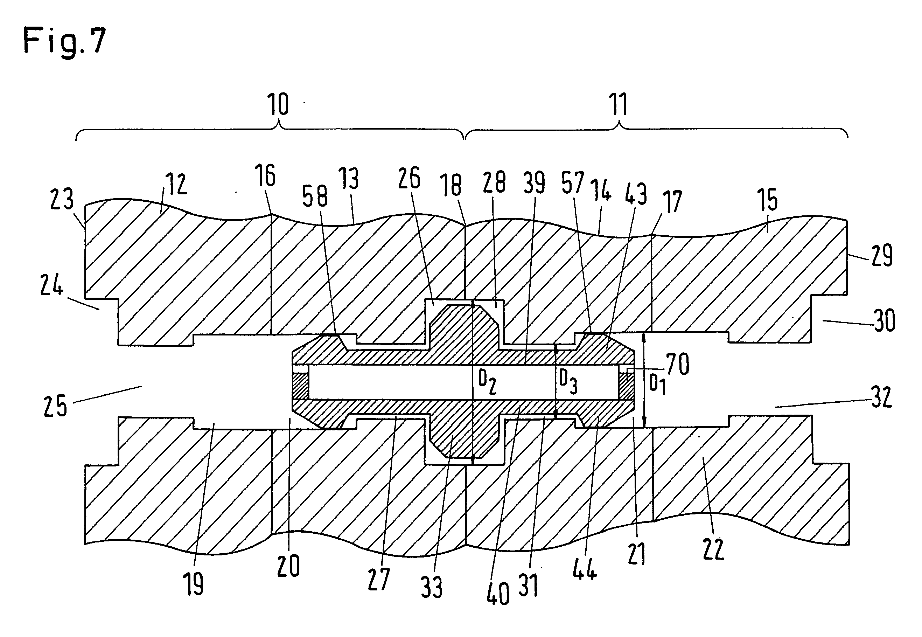

In der Fig. 1 und 7 ist lediglich ein Verbindungselement dargestellt. Zur Verbindung zweier nebeneinanderliegender Installationsgeräte, beispielsweise zweier Leitungsschutzschalter zu einem zweipoligen Leitungsschutzschalter wären dann mehr als eine, typischerweise 3 oder 4 Verbindungselemente erforderlich.

Aus dem zweipoligen Leitungsschutzschalter mit den beiden Polen 10, 11, könnte auch ein drei- oder vierpoliger hergestellt werden. Zu diesem Zweck wird ein weiteres Verbindungselement 33a (hier nicht dargestellt, aber genauso aufgebaut wie das Verbindungselement 33, gleiche Teile sind mit den gleichen Bezugsziffern, ergänzt um den Buchstaben a, bezeichnet) mit den Spreizarmen 37a, 38a durch die Öffnung 32 hindurchgesteckt, bis die Nasen 41a, 42a in der Vertiefung 22 einrasten. Sodann wird ein weiteres Schaltgerät über die Rastarme 39a und 40a gerastet.

Im Gegensatz zu einer Nietverbindung ist eine solche Spreizverbindung einfach. Im Gegensatz zu der in der EP 1 109 277 A2 gezeigten Spreizverbindung ist die Verbindungsqualität mit dem erfindungsgemäßen Spreizelement deutlich größer, und es ist einfach, eine zuverlässige Spreizverbindung herzustellen. Denn durch das federnde Spreizelement 70 werden die Spreizarme des Verbindungselementes jeweils durch Federdruckkraft von innen nach außen gegen die Innenkontur des Durchgangsloches bzw, gegen die Rücksprünge gedrückt. Ein Gegeneinanderfedern der Spreizarme und damit ein unbeabsichtigtes Lösen der Spreizverbindung ist somit nicht mehr möglich.

Wenn die Verbindung der beiden Schaltgeräte 11 und 10 durch Verbindungselemente wie in Fig. 1 gezeigt wieder gelöst werden soll, so kann das folgendermaßen geschehen. Durch die Öffnung 32 steckt man ein Spezialwerkzeug hindurch und drückt damit die beiden freien Enden der Spreizarme 39, 40 des Verbindungselementes 33 soweit zusammen, bis die vorspringenden Nasen 43, 44 wieder von dem Rücksprung 57 entrasten. Somit kann das Verbindungselement durch das Durchgangsloch 31 herausgleiten.

Fig. 7 zeigt eine weitere Variante der Verbindungsmöglichkeit. Die Verbindung nach Fig. 7 unterscheidet sich von derjenigen nach Fig. 1 durch die Innendurchmesser der ersten Vertiefungen 21 und des Durchgangloches 31. In Fig. 7 ist der Innendurchmesser des Durchgangslochs 31 größer als der Außendurchmesser der die Spreizarme 39, 40 umgebenden Zylinderfläche. Dafür ist der Innendurchmesser der ersten Vertiefung 21 etwas geringer als der Außendurchmesser des Konusbasisdurchmessers d1 der die Nasenflächen 49 der vorspringenden Nasen 43, 44 umgebenden Kegelstumpfmantelfläche. Dies hat zur Folge, dass nach dem Einführen der Spreizarme durch das Durchgangsloch 31 und Verrasten der Rastfläche 50a mit der Hinterschneidung 57 die Nasenfläche 49 mit der Basis des Konusses der sie umhüllenden Kegelstumpffläche aufgrund der Druckkraft des federnden Spreizelementes 70 gegen den Innendurchmesser der ersten Vertiefung 21 gedrückt wird. Dies ist eine weitere Möglichkeit, um eine spielfreie feste Spreizverbindung sicherzustellen. Ansonsten haben die in Fig. 7 gezeigten Bauelemente und Bauteile die gleichen Bezugsziffern wie in der Fig. 1.

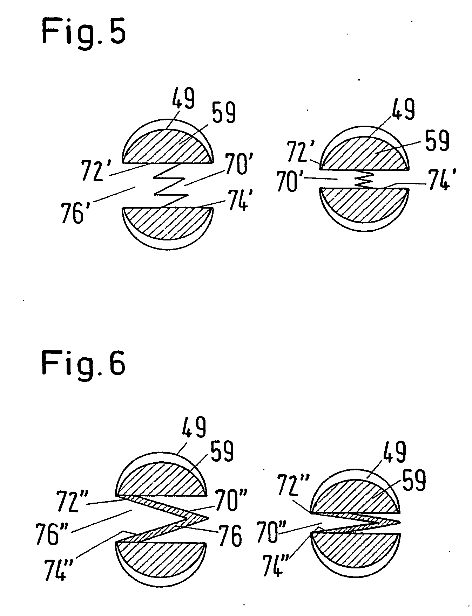

Fig. 5 zeigt schematisch eine weitere Ausführungsmöglichkeit für ein federndes Spreizelement 70'. Fig. 5 zeigt eine Aufsicht auf die freien Enden der Spreizarme eines erfindungsgemäßen Verbindungselementes, wobei die gezeigten Bauteile die gleichen Bezugsziffern tragen wie in den vorhergehenden Figuren, ergänzt um einen Apostroph. Das federnde Spreizelement 70' ist hier als Zylinderdruckfeder 76' ausgeführt. Der linke Bildteil von Fig. 5 zeigt den entspannten Zustand, der rechte Teil der Fig. 5 zeigt den zusammengedrückten Zustand.

Fig. 6 zeigt eine weitere Ausführungsmöglichkeit eines erfindungsgemäßen federnden Spreizelementes 70". Auch in Fig. 6 werden gleiche Bauteile oder Elemente mit den gleichen Bezugsziffern wie in den vorherigen Figuren bezeichnet, ergänzt um einen doppelten Apostroph. Fig. 6 zeigt wie Fig. 5 eine Aufsicht auf die freien Enden der Spreizarme eines erfindungsgemäßen Verbindungselementes. Das federnde Spreizelement 70" ist hier in der Form einer Doppelarmgelenkfeder 76" ausgeführt. Die Doppelarmgelenkfeder 76" besteht aus zwei an ihren freien Enden zusammengefügten federnden Balken. Der linke Teil der Fig. 6 zeigt wieder den entspannten Zustand, der rechte Teil zeigt den zusammengedrückten Zustand.

Selbstverständlich sind auch noch andere Formen zur konkreten Ausgestaltung eines federnden Spreizelementes zur Realisierung eines erfindungsgemäßen Verbindungselementes denkbar. Diese sollen alle in der Erfindung umfasst sein. Die Anbringung des federnden Spreizelementes am freien Ende der Spreizarme hat einen Vorteil darin, dass die ausgeübte Druckfederkraft aufgrund des Hebelarmverhältnisses am größten ist. Es kann jedoch aus konstruktiven Gründen auch erforderlich sein, das federnde Spreizelement nicht am freien Ende der Spreizarme, sondern an anderer Stelle anzubringen. Dann müsste das federnde Spreizelement eine größere Federkonstante aufweisen, ansonsten wäre aber der wesentliche Erfindungsgedanke auch mit einem solchen an anderer Stelle zwischen den beiden Spreizarmen angebrachten federnden Spreizelement realisiert.

Unabhängig von der konkret gewählten Form des Spreizelementes stabilisieren erfindungsgemäße Spreizelemente die Position und die Maße bei der Herstellung der Verbindungselemente.

## Patentansprüche

1. Verbindungselement für nebeneinander angereihte, mit ihren Breitseiten aneinanderliegende Installationsschaltgeräte, insbesondere Leitungsschutzschalter oder Fehlerstromschutzschalter, deren Gehäuse aus je zwei schalenartigen Gehäuseteilen gebildet sind, wobei das Verbindungselement einen etwa zylinderförmigen Grundkörper (34) mit einem ersten Außendurchmesser (d2) aufweist, an dessen Stirnseiten (35, 36) jeweils je zwei radial auffedernde, axial vorspringende, erste (37, 39) und zweite (38, 40) Spreizarme angeformt sind, deren Außenkonturen auf einer zylindrischen Mantelfläche liegen, deren Außendurchmesser (d3) kleiner ist als der erste Außendurchmesser des Grundkörpers (34), und deren freie Enden auf entgegengesetzt liegenden Mantellinien radial vorspringende Nasen (41, 42, 43, 44) aufweisen, die im montierten Zustand hinter Rücksprüngen (58, 57) an den mit dem Verbindungselement zu verbindenden Gehäusen der nebeneinanderliegenden Installationsschaltgeräte (10, 11) einrasten, **dadurch gekennzeichnet, dass** zwischen einem ersten (37, 39) und zweiten (38, 40) Spreizarm jeweils ein federndes Spreizelement (70) angebracht ist, derart, dass das Spreizelement (70) die auffedernde Aufspreizung der Spreizarme (37, 38, 39, 40) unterstützt und Federungen der ersten (37, 39) und zweiten (38, 40) Spreizarme aufeinander zu erschwert.

2. Verbindungselement nach Anspruch 1, **dadurch gekennzeichnet, dass** das Spreizelement (70) zwischen den freien Enden (59, 60) der Spreizarme (39, 40, 37, 38) angebracht ist.

3. Verbindungselement nach Anspruch 2, **dadurch gekennzeichnet, dass** das Spreizelement (70) eine Druckfeder ist, deren Anlenkpunkte (72, 74) sich an aufeinander zuweisenden Flächen der Spreizarme (37, 38, 39, 40) befinden.

4. Verbindungselement nach Anspruch 3, **dadurch gekennzeichnet, dass** die Druckfeder ein S-förmig gebogenes, längserstrecktes Teil ist.

5. Verbindungselement nach einem der vorigen Ansprüche, **dadurch gekennzeichnet, dass** das federnde Spreizelement (70) an den Spreizarmen (37, 38, 39, 40) angeformt ist.

6. Verbindungselement nach Anspruch 5, **dadurch gekennzeichnet, dass** das federnde Spreizelement (70) aus dem gleichen Material besteht wie die Spreizarme (37, 38, 39, 40).

7. Ein in Spritzgusstechnik gefertigtes Verbindungselement nach einem der vorigen Ansprüche.

8. Verbindungselement nach Anspruch 7, **dadurch gekennzeichnet, dass** das Verbindungselement mit dem Spreizelement (70) zusammen in einem Spritzgussvorgang gefertigt ist.

9. Ein aus Kunststoff gefertigtes Verbindungselement nach einem der vorigen Ansprüche.

10. Verbindungselement nach einem der vorigen Ansprüche, **dadurch gekennzeichnet, dass** die Spreizarme (37, 38, 39, 40) in montiertem Zustand an ihrem freien Ende (59, 60) mit einem Spezialwerkzeug aufeinander drückbar sind.

11. Verbindungselement nach einem der vorigen Ansprüche, **dadurch gekennzeichnet, dass** die freien Enden der Nasen (41, 42, 43, 44) konisch zugespitzt sind.

12. Verbindungselement nach einem der vorigen Ansprüche, **dadurch gekennzeichnet, dass** die Stirnflächen (35, 36) des Grundkörpers (34) stumpf konisch ausgebildet sind, wobei die Konuswinkel gegeneinander geöffnet sind.

13. Verbindungselement nach einem der vorigen Ansprüche, **dadurch gekennzeichnet, dass** die den Stirnflächen (35, 36) gegenüberliegenden Nasenflächen (49a, 50a) eine Konusform aufweisen, deren Konuswinkel in entgegengesetzter Richtung offen ist.

14. Verbindungselement nach Anspruch 12 und/oder 13, **dadurch gekennzeichnet, dass** der Konus-Basisdurchmesser (d1) größer ist als der Außendurchmesser (d2) der zylindrischen Mantelfläche, und kleiner als der erste Außendurchmesser (d1) des zylindrischen Grundkörpers (34).

15. Verbindung von Installationsschaltgeräten, deren Gehäuse aus je zwei schalenartigen Gehäuseteilen gebildet sind, mit einem Verbindungselement gemäß einem der Ansprüche 1 bis 14, wobei jedes Gehäuseteil, ausgehend von einer Trennfuge (16, 17) zwischen zwei Gehäuseteilen (12, 13, 14, 15) eine zylindrische, erste Vertiefung (18, 19, 20, 21) mit einem ersten, mit dem Konus-Basisdurchmesser (d1) des Verbindungselerrients korrespondierenden Innendurchmesser (D1), und ausgehend von der Gehäusebreitseite (18) eine zylindrische, zweite Vertiefung (24, 26, 28, 30) mit einem zweiten, mit dem Außendurchmesser (d2) des zylindrischen Grundkörpers (34) korrespondierenden Innendurchmesser (D2) besitzt, die durch ein zylindrisches Durchgangsloch (27, 31) miteinander verbunden sind, aufweist, **dadurch gekennzeichnet, dass** das Verbindungselement mit seinen Nasenflächen (49a, 50a) die am Übergang der ersten zylindrischen Vertiefungen (20, 21) in den zu verbindenden Gehäuseteilen (13, 14) der Installationsschaltgeräte (10, 11) auf die zylindrischen Durchgangslöcher (27, 31) entstehenden Rücksprünge (57, 58) hintergreift und die Spreizelemente (70) die federnden Spreizarme (37, 38, 39, 40) gegen die Innenkontur der ersten zylindrischen Vertiefungen (20, 21) und / oder der Durchgangslöcher (27, 31) drückt.

16. Verbindung nach Anspruch 15, **dadurch gekennzeichnet, dass** die die Nasenflächen (49, 50) der radial vorspringenden Nasen (41, 42, 43, 44) umhüllende Flächen im nicht eingebauten Zustand auf Mantelflächen ovaler Kegelstümpfe liegen, und im eingebauten Zustand auf Mantelflächen etwa kreisförmiger Kegelstümpfe.

17. Verfahren zur Herstellung einer Verbindung zwischen Installationsschaltgeräten gemäß einem der Ansprüche 15 bis 16 mit einem Verbindungselement gemäß einem der Ansprüche 1 bis 14, **dadurch gekennzeichnet, dass** in an der einen Breitseite eines ersten Installationsschaltgerätes angeordnete Öffnungen mit Rücksprüngen je ein Verbindungselement eingerastet wird und dass ein zweites Installationsschaltgerät senkrecht zur Breitseite gegen das erste Installationsschaltgerät gedrückt wird, wobei jedes Verbindungselement in Öffnungen mit Rücksprüngen an der anderen Breitseite des zweiten Installationsschaltgerätes eingreift.

18. Verfahren nach Anspruch 17, **dadurch gekennzeichnet, dass** zum Lösen der Verbindung von der dem Verbindungselement gegenüberliegenden Seite des Installationsschaltgerätes her mit einem Spezialwerkzeug durch die Öffnung, in die das Verbindungselement eingerastet wurde, hindurchgegriffen wird und mit dem Spezialwerkzeug die Spreizarme des Verbindungselementes soweit zusammengedrückt werden, dass die radial vorspringenden Nasen (41, 42, 43, 44) des Verbindungselementes von den Rücksprüngen (57, 58) entrasten und das Verbindungselement aus dem Durchgangsloch (25, 32) herausgezogen werden kann.

## Claims

1. A connector element for two installation switchgears, adjacently attached with the broad faces thereof in contact, especially miniature circuit breakers or residual current circuit breakers, the housings of which are each formed from two shell-like housing pieces, with the connector element comprising an approximately cylindrical base body (34) with a first external diameter (d2), on the front sides (35, 36) of which two radially-sprung, axially projecting first (37, 39) and second (38, 40) spreader arms are molded, with the external contours of the spreader arms lying on a cylindrical jacket surface, the external diameter (d3) of which is smaller than the first external diameter of the base body (34), and the free ends thereof comprise radially projecting lugs (41,42,43,44) on opposed external lines, which, in the assembled state, clip behind recesses (58, 57) on the housings of adjacent installation switchgears (10, 11), which housings are to be joined with the connector element, **characterized in that** a resilient spreader element (70) is each mounted between a first (37, 39) and second (38, 40) spreader arm, such that the spreader element (70) supports the sprung spreading of the spreader arms (37, 38, 39, 40) and which impedes the sprung contact of the first (37, 39) and second (38, 40) spreader arms with each other.

2. A connector element according to claim 1, **characterized in that** the spreader element (70) is attached between the free ends (59, 60) of the spreader arms (39, 40, 37, 38).

3. A connector element according to claim 2, **characterized in that** the spreader element (70) is pressure spring whose linkage points (72, 74) are located on mutually facing surfaces of the spreader arms (37, 38, 39, 40).

4. A connector element according to claim 3, **characterized in that** the pressure spring is an S-shaped bent part extending in a longitudinal manner.

5. A connector element according to one of the preceding claims, **characterized in that** the resilient spreader element (70) is attached to the spreader arms (37, 38, 39,40).

6. A connector element according to claim 5, **characterized in that** the resilient spreader element (70) consists of the same material as the spreader arms (37, 38, 39, 40).

7. A connector element according to one of the preceding claims which is made by means of injection molding.

8. A connector element according to claim 7, **characterized in that** the connector element is produced with the spreader element (70) together in an injection molding process.

9. A connector element according to one of the preceding claims which is made of plastic.

10. A connector element according to one of the preceding claims, **characterized in that** the spreader arms (37, 38, 39, 40) can be pressed with a special tool onto each other in the mounted state at their free end (59, 60).

11. A connector element according to one of the preceding claims, **characterized in that** the free ends of the lugs (41, 42, 43, 44) are conically tapered.

12. A connector element according to one of the preceding claims, **characterized in that** the face surfaces (35, 36) of the base body (34) are provided with a conically obtuse configuration, with the cone angles being opened against each other.

13. A connector element according to one of the preceding claims, **characterized in that** the lug surfaces (49a, 50a) opposite of the face surfaces (35, 36) have a conical shape whose cone angle is open in the opposite direction.

14. A connector element according to claim 12 and/or 13, **characterized in that** the base diameter (d1) of the cone is larger than the external diameter (d2) of the cylindrical jacket surface and smaller than the first external diameter (d1) of the cylindrical base body (34).

15. A connection of installation switchgears whose housings are made of two shell-like housing pieces, comprising a connector element according to one of the claims 1 to 14, with each housing piece, starting out from a parting line (16, 17) between two housing pieces (12, 13, 14, 15), having a cylindrical first depression (18, 19, 20, 21) with a first inside diameter (D1) which corresponds to the base diameter (d1) of the cone of the connector element, and, starting out from the broad side (18) of the housing, a cylindrical second depression (24, 26, 28, 30) with a second inside diameter (D2) which corresponds to the external diameter (d2) of the cylindrical base body (34), which housing pieces are joined to each other by a cylindrical pass-through hole (27, 31), **characterized in that** the connector element with its lug surfaces (49a, 50a) grips behind the set-offs (57, 58) originating at the transition point of the first depression (20, 21) in the housing pieces (13, 14) of the installation switchgears (10, 11) to be connected and the spreader elements (70) press the resilient spreader arms (37, 38, 39, 40) against the inside contour of the first cylindrical depression (20, 21) and/or the pass-through holes (27, 31).

16. A connection according to claim 15, **characterized in that** the lug surfaces (49, 50) of the radially protruding lugs (41, 42, 43 44) rest on the jacket surfaces of oval truncated cones in the non-installed state and on the jacket surfaces of approximately circular truncated cones in the built-in state.

17. A method for producing a connection between installation switchgears according to one of the claims 15 to 16 with a connector element according to one of the claims 1 to 14, **characterized in that** a connector element is each latched into openings with offsets arranged on the one broad side of a first installation switchgear and that a second installation switchgear is pressed perpendicularly to the broad side against the first installation switchgear, with each connector element engaging in openings with offsets on the other broad side of the second installation switchgear.

18. A method according to claim 17, **characterized in that** for detaching the connection from the side of the installation switchgear which is opposite of the connector element a special tool is threaded through the opening into which the connector element was latched, and by means of the special tool, the spreader arms of the connector element are compressed to such an extent that the radially protruding lugs (41, 42, 43, 44) of the connector element unlatch from the setoffs (57, 58) and the connector element can be withdrawn from the pass-through hole (25, 32).

## Revendications

1. Elément d'assemblage pour des commutateurs d'installation disposés les uns à côté des autres et appliqués les uns contre les autres avec leurs grands côtés, en particulier des disjoncteurs de protection de ligne ou des disjoncteurs à courant de défaut, dont le boîtier se compose respectivement de deux parties de boîtier en forme de coques, l'élément d'assemblage présentant un corps de base (34) sensiblement cylindrique avec un premier diamètre extérieur (d2), sur les faces frontales (35, 36) duquel sont formés d'une pièce respectivement deux premiers (37, 39) et deux seconds (38, 40) bras à expansion qui font saillie dans la direction axiale et s'écartent élastiquement dans la direction radiale et dont les contours extérieurs se situent sur une surface enveloppe cylindrique dont le diamètre extérieur (d3) est inférieur au premier diamètre extérieur du corps de base (34), et dont les extrémités libres comportent, sur des génératrices opposées, des mentonnets (41, 42, 43, 44) qui font saillie dans la direction radiale et, à l'état monté, s'enclenchent derrière des épaulements (58, 57) aménagés sur les boîtiers des commutateurs d'installation (10, 11) juxtaposés, devant être reliés à l'aide de l'élément d'assemblage, **caractérisé par le fait qu'**un élément écarteur (70) élastique est monté chaque fois entre un premier (37, 39) et un deuxième (38, 40) bras à expansion, de manière telle que l'élément écarteur (70) assiste l'écartement élastique des bras (37, 38, 39, 40) et rende plus difficile le rapprochement élastique réciproque des premiers (37, 39) et deuxièmes (38, 40) bras à expansion.

2. Elément d'assemblage selon la revendication 1, **caractérisé par le fait que** l'élément écarteur (70) est monté entre les extrémités libres (59, 60) des bras à expansion (39, 40, 37, 38).

3. Elément d'assemblage selon la revendication 2, **caractérisé par le fait que** l'élément écarteur (70) est un ressort de compression dont les points d'articulation (72, 74) se situent sur des surfaces tournées l'une vers l'autre des bras à expansion (37, 38, 39, 40).

4. Elément d'assemblage selon la revendication 3, **caractérisé par le fait que** le ressort de compression est un élément allongé, incurvé en forme de S.

5. Elément d'assemblage selon une des revendications précédentes, **caractérisé par le fait que** l'élément écarteur (70) élastique est formé d'une seule pièce avec les bras à expansion (37, 38, 39, 40).

6. Elément d'assemblage selon la revendication 5, **caractérisé par le fait que** l'élément écarteur (70) élastique est réalisé à partir du même matériau que les bras à expansion (37, 38, 39, 40).

7. Elément d'assemblage selon une des revendications précédentes, fabriqué selon le procédé de moulage par injection.

8. Elément d'assemblage selon la revendication 7, **caractérisé par le fait que** ledit élément d'assemblage est fabriqué avec l'élément écarteur (70) au cours d'une même opération de moulage par injection.

9. Elément d'assemblage selon une des revendications précédentes, réalisé en matière plastique.

10. Elément d'assemblage selon une des revendications précédentes, **caractérisé par le fait que**, à l'état monté, les bras à expansion (37, 38, 39, 40) peuvent être comprimés en direction l'un de l'autre, à leur extrémité libre (59, 60).

11. Elément d'assemblage selon une des revendications précédentes, **caractérisé par le fait que** les extrémités libres des mentonnets (41, 42, 43, 44) se rétrécissent en forme de cône.

12. Elément d'assemblage selon une des revendications précédentes, **caractérisé par le fait que** les faces frontales (35, 36) du corps de base (34) sont conformées en cônes tronqués, les angles de cône s'ouvrant l'un vers l'autre.

13. Elément d'assemblage selon une des revendications précédentes, **caractérisé par le fait que** les surfaces de mentonnet (49a, 50a) situées en vis-à-vis des faces frontales (35, 36) présentent une forme conique dont l'angle de cône s'ouvre dans la direction opposée.

14. Elément d'assemblage selon les revendications 12 et/ou 13, **caractérisé par le fait que** le diamètre de base du cône (d1) est supérieur au diamètre extérieur (d3) de la surface enveloppe cylindrique et inférieur au premier diamètre extérieur (d2) du corps de base (34) cylindrique.

15. Assemblage de commutateurs d'installation dont les boîtiers sont constitués respectivement de deux parties en forme de coques, au moyen d'un élément d'assemblage selon une des revendications 1 à 14, où chaque partie de boîtier, en partant d'une ligne de joint (16, 17) entre deux parties de boîtier (12, 13, 14, 15), présente un premier évidement (19, 20, 21, 22) cylindrique, avec un premier diamètre intérieur (D1) correspondant au diamètre de base de cône (d1) de l'élément d'assemblage, et, en partant du grand côté de boîtier (18), présente un deuxième évidement (24, 26, 28, 30) cylindrique, avec un deuxième diamètre intérieur (D2) correspondant au diamètre extérieur (d2) du corps de base (34) cylindrique, lesdits évidements étant reliés par un trou de passage (27, 31) cylindrique, **caractérisé par le fait que** l'élément d'assemblage s'engage avec ses surfaces de mentonnet (49a, 50a) derrière les épaulements (57, 58) qui sont formés au niveau de la transition entre les premiers évidements (20, 21) cylindriques des parties de boîtier (13, 14) à assembler des commutateurs d'installation (10, 11) et les trous de passage (27, 31) cylindriques, et que les éléments écarteurs (70) poussent les bras à expansion (37, 38, 39, 40) élastiques contre le contour intérieur des premiers évidements (20, 21) cylindriques et/ou des trous de passage (27, 31).

16. Assemblage selon la revendication 15, **caractérisé par le fait que**, à l'état non monté, les surfaces enveloppant les surfaces de mentonnet (49, 50) des mentonnets (41, 42, 43, 44) faisant saillie dans la direction radiale se situent sur des surfaces enveloppes de tronc de cônes ovales et, à l'état monté, sur des surfaces enveloppes de troncs de cône sensiblement circulaires.

17. Procédé de réalisation d'un assemblage de commutateurs d'installation selon une des revendications 15 à 16, au moyen d'un élément d'assemblage selon une des revendications 1 à 14, **caractérisé par le fait que** dans des ouvertures aménagées dans l'un des grands côtés d'un premier commutateur d'installation et dotées d'épaulements, on enclenche chaque fois un élément d'assemblage, et **par le fait qu'**un deuxième commutateur d'installation est pressé contre le premier commutateur, perpendiculairement à son grand côté, chaque élément d'assemblage s'engageant dans des ouvertures dotées d'épaulements et situées sur l'autre grand côté du deuxième commutateur d'installation.

18. Procédé selon la revendication 17, **caractérisé par le fait que** pour libérer l'assemblage depuis le côté du commutateur d'installation qui est opposé à l'élément d'assemblage, un outil spécial est engagé par l'ouverture dans laquelle a été enclenché l'élément d'assemblage, et cet outil spécial sert à comprimer les bras à expansion de l'élément d'assemblage dans une mesure telle que les mentonnets (41, 42, 43, 44) radialement saillants de l'élément d'assemblage se dégagent des épaulements (57, 58) et l'élément d'assemblage puisse être retiré du trou de passage (25, 32).
